# EUROPEAN PATENT APPLICATION

(11) **EP 4 191 181 A1**
(43) Date of publication of application: **07.06.2023**
(21) Application number: 21020608.2
(22) Date of filing: 02.12.2021
(51) Int. Cl.: F27B 7/20, C04B 7/36, C04B 7/43, F27B 7/38, F27B 7/40

(54) **CEMENT MANUFACTURING PLANT AND METHOD OF OPERATING A CEMENT MANUFACTURING PLANT**

(71) Applicant: Holcim Technology Ltd, 6300 Zug (CH)
(72) Inventor: Bucher, Ernst, 5113 Holderbank (CH); Wimmert, Dirk, 5113 Holderbank (CH)
(74) Representative: Keschmann, Marc

(57) **Abstract**

A cement manufacturing plant comprises a raw meal mill, at least one preheater string, a clinker furnace and a clinker cooler comprising a first section and a second section, wherein preheater exhaust gas recirculation means are provided for recirculating exhaust gas leaving the at least one preheater string into the first section of the clinker cooler, and wherein the cement plant is configured for switching between an air operation mode and an oxyfuel operation mode, comprising first switching means for connecting either a source of air or a source of oxygen rich gas to a burning zone of the clinker furnace burner, and second switching means for either establishing or separating a connection of the preheater exhaust gas recirculation means to the first section of the clinker cooler.

## Description

The invention refers to a cement manufacturing plant and to a method of operating a cement manufacturing plant.

The production of cement generates substantial quantities of carbon dioxide. The carbon dioxide is produced in two ways. One of the materials in cement production is calcium carbonate. The calcium carbonate is heated to calcine it and loses carbon dioxide to form calcium oxide. The burning of carbon-containing fuel to generate the high temperatures required to produce cement also generates carbon dioxide. For environmental reasons it is desirable to reduce the amount of carbon dioxide released into the atmosphere.

The raw materials for cement production, which include calcium carbonate, are generally mixed, dried and ground to form a raw meal which is then processed to produce clinker, the main component of cement. In a preheating step the raw meal is heated to just below calcination temperature. It then passes to a calciner where further heating takes place and, as the temperature rises, calcination of the calcium carbonate to calcium oxide takes place and carbon dioxide is released. The calcined raw meal then passes to a kiln where it is heated to higher temperatures to produce clinker which is subsequently ground to yield cement powder.

Air is generally used as a source of oxygen for combustion of fuel to provide heat for the calciner and the kiln. The principal gases present in air are nitrogen (about 80% by volume) and oxygen (about 20% by volume).

Combustion of a solid or liquid, carbon-based fuel can be summarized in the equation:

C + O2 = CO2

One volume of oxygen produces one volume of carbon dioxide. Nitrogen present in the air used for combustion is not involved in the combustion. Following the combustion, the gas stream contains about 80% by volume of nitrogen and about 20% of carbon dioxide. The overall volume of gas is increased by the heat generated. When a solid or liquid hydrocarbonaceous fuel is burned combined hydrogen present in the fuel combines with oxygen according to the equation:

4H + O2 = 2H2O

The water generated is in the gaseous state and is therefore present as a gaseous diluent of the carbon dioxide which is also produced. One volume of oxygen produces two volumes of gaseous water, the volume of the solid or liquid hydrocarbonaceous fuel being negligible relative to the volumes of gas involved. Gaseous water therefore contributes to an increase in the volume of gas formed by combustion compared to the volume of oxygen used. It is, however, readily separated from the carbon dioxide by simple cooling at a later stage in the operation. The overall volume of gas increases at the combustion stage with the increased temperature.

In the combined gases from the calcination process and from fuel combustion the carbon dioxide is generally present at from 14 to 33% by volume. The other principal constituent of the gas is nitrogen. Although the mixture of nitrogen and carbon dioxide could be separated and the carbon dioxide stored to prevent its release into the atmosphere, the energy required to effect the separation is too high to make it worthwhile. If the nitrogen in air is removed and the resulting substantially pure oxygen used to burn a fuel, nitrogen is then not present as a diluent of the carbon dioxide produced.

In the oxyfuel process, oxygen and recycled flue gas replace the conventional combustion air, so as to directly generate a CO₂-rich flue gas during combustion and thereby to reduce downstream CO₂ purification costs.

However, if oxygen is used instead of air in burning the fuel required to produce cement, additional cost might be incurred. In addition, combustion processes involving undiluted oxygen generally proceed with great vigour and generate very high temperatures capable of damaging or shortening the working life of a production plant.

Adapting an existing cement manufacturing plant to be suitable for an oxyfuel operation mode requires several structural as well as procedural modifications. For example, provisions have to be taken for maintaining the required gas velocity in the suspension-type preheaters and in the pre-calciner. Due to the reduction or elimination of the nitrogen in the combustion gas, the combustion gas volume is significantly reduced so that the speed of the gas stream would not be sufficient to support the raw meal in the preheater and the pre-calciner. To compensate for this reduced flow of combustion gas, cement manufacturing plants working according to the oxyfuel operation mode provide for a recirculation of the CO₂ rich exhaust gas into the clinker furnace.

Since the oxyfuel operation aims at obtaining an exhaust gas that has a CO₂ content as high as possible, the design of the cement manufacturing plant must provide for a separation of gas streams so as to avoid the mixing of CO₂ rich gases originating from fuel combustion and raw meal decarbonation with other streams of gas, such as cooler vent-air, raw meal drying gas, cooling gas, etc.

Another important aspect to be addressed is the ingress of false air into the kiln system due to the fact that the kiln system is generally operated in a negative pressure regime. Flue gas from conventional kiln lines at the stack typically contains 30% or more of false air. Since the false air contains 80% of nitrogen this represents a strong dilution with this unwanted component.

The use of so-called alternative fuels is widespread in the cement clinker manufacturing industry. Such fuel may contain considerable amounts of chlorine and alkalis which concentrate in the kiln system due to a continuous cycle of evaporation and condensation and may produce strong operational difficulties. A proven solution to this problem is the installation of a bypass system which extracts hot gases from the kiln inlet. Chlorine and alkalis are highly concentrated at this location. Typically 5-10% of the kiln inlet gas at a temperature of around 1200°C is extracted, cooled, filtered and then sent to the main stack of the kiln system. In oxyfuel operation this would result in a considerable and unwanted loss of CO₂.

Considering that the oxyfuel combustion process is a relatively new technology in cement manufacturing and considering the uncertainty of a long-term benefit of this technology, cement manufacturers are hesitant to make substantial investments in new manufacturing plants that are suitable for an oxyfuel combustion only.

Therefore, the instant invention aims at providing a cement manufacturing plant that is suitable for various operation modes, particularly oxyfuel operation mode as well as traditional operation modes.

In order to solve these and other objects, the invention, according to a first aspect thereof, refers to a cement manufacturing plant comprising
a raw meal mill for grinding raw meal to obtain ground raw meal,
at least one preheater string comprising cyclone suspension-type preheaters for preheating the ground raw meal in counter current flow to hot exhaust gas coming from a clinker furnace,
optionally a pre-calciner for pre-calcining the preheated raw meal,
a clinker furnace for calcining the preheated and optionally pre-calcined raw meal in counter current flow to combustion gas of a clinker furnace burner to obtain cement clinker,
a clinker cooler for cooling the cement clinker, the clinker cooler being preferably connected to the raw meal mill for feeding clinker cooler vent-air to the raw meal mill, wherein the clinker cooler comprises a first section and a second section, the first section being adjacent a clinker discharge end of the clinker furnace and the second section being remote from the clinker discharge end of the clinker furnace,
optionally cooler vent-air recirculation means for recirculating clinker cooler vent-air from the raw meal mill to the second section of the clinker cooler,
optionally bypass gas recirculation means for recirculating bypass gas, which is taken from between an exhaust gas end of the clinker furnace and the at least one preheater string, to the first section of the clinker cooler,
preheater exhaust gas recirculation means for recirculating exhaust gas leaving the at least one preheater string into the first section of the clinker cooler,
the cement plant being configured for switching between an air operation mode and an oxyfuel operation mode and comprising:
   first switching means for connecting either a source of air or a source of oxygen rich gas to a burning zone of the clinker furnace burner via the first section of the clinker cooler,
   second switching means for either establishing or separating a connection of the preheater exhaust gas recirculation means to the first section of the clinker cooler.

Thus, the cement manufacturing plant is characterized by a specific plant design comprising recirculation means in combination with the possibility of switching between an oxyfuel operation mode, in which an oxygen rich combustion gas is used for the combustion process taking place in the clinker furnace and optionally for the combustion process taking place in the pre-calciner, and an air operation mode, in which air is used as the combustion gas. In this way, an increased flexibility is allowed for the operator of a cement manufacturing plant, in order to adapt to changing circumstances with regard to the availability and costs of combustion gas and fuel, as well as to environmental and legal requirements.

In the oxyfuel operation mode, oxygen rich gas is used as the combustion gas. Oxygen rich gas is understood to be a gas that has an oxygen content of > 30 vol.%, preferably > 50 vol.%, preferably > 75 vol.%, preferably > 90 vol.%, in particular pure oxygen.

In order to switch between the two operation modes, first switching means are provided for connecting either a source of air or a source of oxygen rich gas to a burning zone of the clinker furnace burner. The source of oxygen rich gas may be a storage tank or an air separation unit, in which atmospheric air is separated into its primary components, nitrogen and oxygen. The air separation unit may separate oxygen by means of fractional distillation, in particular cryogenic air separation, or by membrane techniques, pressure swing adsorption (PSA) or vacuum pressure swing adsorption (VPSA). The switching between the oxygen rich gas and air as the combustion gas may be realized by any means that are suitable to alternatively supply oxygen rich gas or air to the burning zone of the clinker furnace burner and optionally to the burning zone of the burner of the pre-calciner. The switching means may comprise means for regulating the flow of a gas, such as for opening or closing a passageway of the gas. In particular, switching means may comprise valves. Preferably, the switching means are configured to close a passageway of an air supply to the clinker furnace burner and to open a passageway of an oxygen rich gas supply to the clinker furnace burner, or conversely, to open a passageway of an air supply to the clinker furnace burner and to close a passageway of an oxygen rich gas supply to the clinker furnace burner.

The cement manufacturing plant of the instant invention comprises at least one recirculating flow of gas. In particular, the preheater exhaust gas, optionally the bypass gas and optionally the cooler vent-air may be recirculated.

The preheater exhaust gas recirculation is provided for recirculating exhaust gas leaving the at least one preheater string into the first section of the clinker cooler. In the oxyfuel operation mode, the preheater exhaust gas is a CO₂ rich gas that is recirculated into the clinker furnace via the clinker cooler in order to compensate for the reduction of the gas volume that results from using an oxygen rich gas instead of air as the combustion gas. Further, said recirculation leads to an increase of the CO₂ concentration in the preheater exhaust gas. The higher the CO₂ concentration in the preheater exhaust gas, the more energetically and ecologically efficient the separation of CO₂ from the exhaust gas and its sequestration are.

The preheater exhaust gas is introduced into the first section of the clinker cooler that is separate from the second section of the clinker cooler in order to avoid a mixing of the CO₂ rich preheater exhaust gas with air that is present in the second section. For separating the first section of the clinker cooler from the second section, the clinker cooler comprises separation means that essentially prevents a gas exchange between the first and the second section of the clinker cooler. The separation means may comprise wall elements.

According to the invention, switching means are provided in order to switch between an oxyfuel operation mode and an air operation mode. In the oxyfuel operation mode, the preheater exhaust gas is recirculated into the clinker cooler as described above. In the air operation mode, the recirculation is interrupted and the preheater exhaust gas, after having been subjected to an exhaust gas treatment, is directed to an exhaust stack for releasing the exhaust gas into the environment. The switching means may comprise means for regulating the flow of a gas, such as for opening or closing a passageway of the gas. In particular, switching means may comprise valves. Preferably, the switching means are configured to close a passageway of the preheater exhaust gas to the exhaust stack and to open a passageway of the preheater exhaust gas to the clinker cooler, or conversely, to open a passageway of the preheater exhaust gas to the exhaust stack and to close a passageway of the preheater exhaust gas to the clinker cooler.

A bypass gas recirculation is optionally provided for recirculating bypass gas, which is taken from between an exhaust gas end of the clinker furnace and the at least one preheater string, to the first section of the clinker cooler. The bypass is preferably connected to the kiln inlet chamber of the clinker furnace and serves to remove a portion of the process gas which contains high concentrations of the volatile components that are suspended in the kiln atmosphere. This is used to lower the level of chlorine, alkalis and/or sulfur contents. The hot gas is cooled, e.g. by quenching with cold air, and the volatile components will condensate and form solid particles. The bypass gas recirculation therefore may comprise a filter for removing said volatile components from the bypass gas.

In the oxyfuel operation mode, the bypass gas has an elevated CO₂ content, so that it is advantageous to reintroduce this gas into the clinker furnace via the clinker cooler, in order to avoid the loss of a considerable amount of CO2 to the environment. This would be the case if the bypass-gas after filtration e.g. would be released directly to the kiln exhaust stack. The extracted bypass gas also contains a considerable amount of oxygen which in the case of oxyfuel operation is technically produced oxygen which comes with a rather high production cost. The re-circulation eliminates this loss. Furthermore, this design improves the thermal efficiency of the kiln system since the sensible heat content of the extracted bypass gas is re-introduced to the kiln system via the clinker cooler. The bypass gas recirculation is also active in the air operation mode. In this way, additional switching means for switching between the oxyfuel operation mode and the air operation mode may be avoided.

A cooler vent-air recirculation is preferably provided for recirculating clinker cooler vent-air from the raw meal mill to the second section of the clinker cooler. In the cooler vent-air recirculation air is used as a cooling gas for the clinker, which is introduced into the second section of the clinker cooler. The cooling air is extracted from the clinker cooler at an elevated temperature. Said cooler vent-air is then introduced into the raw meal mill, where the heat of the cooler vent-air is used to dry raw meal, while it is being ground. The air leaving the raw meal mill may preferably be treated in a filter to remove fine particles that have been entrained from the raw meal and are suspended in the air. The air is subsequently reintroduced into the clinker cooler to close said air circulation. The cooler vent-air recirculation means may comprise a branch duct for branching off a partial flow from the circulating air that is released into the environment through an exhaust stack. The second section of the cooler and with that the raw meal mill is usually operated with air. The purpose of the recirculation is to increase the cooler vent-air temperature and with that the drying capacity of the raw meal mill system.

The cooler vent-air recirculation may be active both in the oxyfuel operation mode and in the air operation mode, thereby avoiding additional switching means for switching between the oxyfuel operation mode and the air operation mode.

Referring now to the bypass gas recirculation, a preferred embodiment of the invention provides that the bypass gas recirculation means comprises cooling means for cooling the bypass gas that is recirculated to the first section of the clinker cooler, wherein the cooling means preferably comprises at least one mixing chamber for mixing the bypass gas with a cooling gas. The cooling of the bypass gas allows an efficient separation of volatile components, such as chlorine components present in the bypass gas, and additionally makes the bypass gas suitable for being used as a coolant in the clinker cooler. Instead of using a heat exchanger, such an air-to-air heat exchanger, for cooling the bypass gas, the cooling is preferably effected by mixing a cooling gas with the bypass gas. Preferably, two cooling stages are provided, the first cooling stage, comprising a mixing chamber and being arranged upstream the bypass filter, serves to condensate the volatiles and to cool the gases down to a preferable temperature for filtration, typically 200°C. The second cooling stage downstream the bypass filter further reduces the temperature of the gas to make it suitable for the clinker cooler, typically 100-150°C.

Depending on whether an oxyfuel operation mode or an air operation mode is active, a suitable cooling gas is used to cool the bypass gas. In particular, in the air operation mode, ambient air may be used as the cooling gas that is mixed with the bypass gas. In the oxyfuel operation mode, a CO₂ rich gas taken from the cement plant may be used as the cooling gas. Preferably, the CO₂ rich preheater exhaust gas may be used as the cooling gas for being mixed with the bypass gas. If preheater exhaust gas is used as the cooling gas, the preheater exhaust gas will have to be cooled to a temperature of 50-150°C before being mixed with the bypass gas.

According to a preferred embodiment of the invention, the preheater exhaust gas recirculation means comprises a diverter for diverting a partial flow of the preheater exhaust gas to the mixing chamber of the bypass, wherein third switching means are provided for either using air, or the preheater exhaust gas that is diverted from the preheater exhaust gas recirculation means, as the cooling gas in the cooling means of the bypass.

As mentioned above in relation to the preheater exhaust gas recirculation means, the preheater exhaust gas may be subjected to an exhaust gas treatment, before it is either recirculated into the clinker cooler in the oxyfuel operation mode, or is released into the environment through an exhaust stack in the air operation mode. With regard to the exhaust gas treatment, a preferred embodiment provides that the preheater exhaust gas recirculation means comprises a thermal oxidizer, preferably a regenerative thermal oxidizer, for thermally decomposing volatile compounds in the preheater exhaust gas. In the thermal oxidizer, the preheater exhaust gas is heated up to approx. 750-900°C and put in an oxidizing atmosphere. Here, the hazardous air pollutants and volatile organic compounds contained in the exhaust gas that are generally based on hydrocarbon are destroyed via thermal combustion by chemically oxidizing them to form CO₂ and H₂O. In a regenerative thermal oxidizer, the heat of the gas at the exit of the thermal oxidizer is re-used to heat up the exhaust gas at the inlet of the thermal oxidizer. The thermal oxidizer is arranged upstream of the second switching means so as to be active both in the oxyfuel operation mode and in the air operation mode.

In the oxyfuel operation mode, the thermal oxidizer is of particular relevance. It oxidizes the CO contained in the preheater exhaust gas to CO₂. CO may be contained in the preheater exhaust gas for the following reasons. In a traditional air-operation mode that does not comprise a thermal oxidizer, a cement plant is usually operated with a certain amount of excess oxygen after the last combustion in the process (e.g. the pre-calciner), in order to avoid CO- emissions from the combustion processes. Typically, the clinker furnace is operated in a way that the preheater exhaust gas contains 4-5% of oxygen. In an air operation mode, such excess oxygen content is acceptable, since the combustion oxygen comes from the ambient air and does not incur costs. In contrast, in an oxyfuel operation mode the oxygen is technically produced at rather high cost. Due to the recirculation of the preheater exhaust gas, its oxygen content is not lost, but is re-used in the process. However the oxygen which is diverted from the preheater exhaust gas recirculation to a CO₂ purification unit is lost for the process. For this reason, it is advantageous to minimize the amount of excess oxygen in the preheater exhaust gas. Therefore, it is preferable to operate the cement manufacturing plant with < 3 vol%, e.g. only 2 vol.-%, excess oxygen in the preheater exhaust gas. It is expected that a considerable amount of CO is generated by the process under this condition. This CO, however, will be oxidized in the regenerative thermal oxidizer, thus generating heat. It hence serves as a fuel for the regenerative thermal oxidizer to compensate for the heat losses of such a system. If there is enough CO, the regenerative thermal oxidizer can be operated in an autotherm manner. Preferably, a small oxygen injection may be provided upstream the regenerative thermal oxidizer, in order to further optimize this concept and to add just the amount of oxygen which is required for the safe operation of the regenerative thermal oxidizer.

The preheater exhaust gas leaves the preheater string at a temperature of 350-450°C. In order to be able to use the preheater exhaust gas a cooling gas in the clinker cooler and optionally for cooling the bypass gas as mentioned above, installations are provided in the preheater exhaust gas recirculation means to decrease the temperature of the preheater exhaust gas. At the same time, the sensible heat of the preheater exhaust gas shall advantageously be recovered so as to be re-used in other processes or to generate electrical energy. For this purpose, the preheater exhaust gas recirculation means may preferably comprise at least one heat exchanger, in which heat from the preheater exhaust gas is transferred to a heat exchanger fluid. Alternatively or in addition, the preheater exhaust gas may also be cooled by directing the exhaust gas through a wet scrubber. In the wet scrubber, the exhaust gas is brought into contact with a scrubbing liquid, such as water, by spraying it with the liquid, by forcing it through a pool of liquid, or by some other contact method, so as to both remove pollutants like e.g. SO₂ and cool the exhaust gas.

According to a preferred embodiment of the invention, the preheater exhaust gas recirculation means comprises a first and a second heat exchanger, the first heat exchanger being arranged upstream of the thermal oxidizer and the second heat exchanger being arranged downstream of the thermal oxidizer, wherein the first and second heat exchangers are integrated into a working fluid cycle of a heat-to-power unit and arranged to transfer heat from the preheater exhaust gas to a working fluid of the working fluid cycle, wherein, in the working fluid cycle, the first heat exchanger is arranged downstream of the second heat exchanger. The first heat exchanger serves to reduce the temperature of the preheater exhaust gas from approx. 350-450°C to approx. 150-250°C. Thereafter, the preheater exhaust gas is directed through the thermal oxidizer and leaves the thermal oxidizer with a temperature of approx. 230-300°C, and is cooled down again by means of the second heat exchanger to a temperature of approx. 80-120°C. Therefore, the working fluid of the working fluid cycle receives heat from the preheater exhaust gas in two stages having different temperature levels. In the first stage, i.e. in the second heat exchanger, the working fluid is pre-heated by receiving heat from the exhaust gas at a lower temperature level, and in the second stage, i.e. in the first heat exchanger, the working fluid is further heated by receiving heat from the exhaust gas at a higher temperature level.

The working fluid cycle comprises a heat-to-power unit, in which the sensible heat of the working fluid is used to generate electrical energy, for example in a turbine connected to an electric generator. Water steam or thermal oil may be used as the working fluid.

Alternatively, the waste heat that has been recovered from the preheater exhaust gas by means of the first and the second heat exchanger may be used to dry the raw meal. This may in particular be the case when the moisture in the raw material is high and the heat in the cooler vent-air is too low for the required drying duty.

The first heat exchanger, the thermal oxidizer and the second heat exchanger may be arranged upstream of the second switching means so as to be active both in the oxyfuel operation mode and in the air operation mode.

In the above preferred embodiment with a first heat exchanger, a thermal oxidizer and second heat exchanger being consecutively flown through by the preheater exhaust gas, a wet scrubber may preferably be arranged downstream of the second heat exchanger. The wet scrubber is used to cool the preheater exhaust gas to a temperature of approx. 40-80°C. All components mentioned here may be arranged upstream of the second switching means so as to be active both in the oxyfuel operation mode and in the air operation mode.

In the oxyfuel operation mode, one objective is to obtain a CO₂ concentration as high as possible in the preheater exhaust gas, in order to enable further use of the CO₂ in various applications or sequestration technologies. In a first step, water may be separated from the preheater exhaust gas after the exhaust gas has been subjected to waste heat recovery and wet scrubbing. According to a preferred embodiment, the preheater exhaust gas recirculation means comprises a cooling and condensing unit for cooling the preheater exhaust gas in the oxyfuel operation mode so as to condense and separate water from the preheater exhaust gas. The cooling and condensing unit serves to cool the preheater exhaust gas to approx. 25-35°C, as a result of which a large amount of water is released from the exhaust gas. In this way, the CO₂ concentration is preferably increased to > 80%, which makes the preheater exhaust gas particularly suitable for its use as a recirculation gas. Since the cooling and condensing unit shall only be used in the oxyfuel operation mode, it is arranged downstream of the second switching means.

Increasing the CO₂ concentration by means of the cooling and condensing unit is beneficial for the efficient operation of a CO₂ purification unit that is arranged downstream of the cooling and condensing unit. The CO₂ purification unit serves to remove all undesired components from the preheater exhaust gas, such as N₂, H₂O, CO, SO_{X}, NOx, HF, Ar, or to reduce their concentration to a required level. A purity of > 96% to > 99.5% CO₂ is beneficial depending on the further utilization of the CO₂.

According to a preferred embodiment of the invention, the preheater exhaust gas recirculation means comprises a diverter for diverting a partial flow of the preheater exhaust gas to the CO₂ purification unit. The diverter is arranged downstream of the second switching means as well as, if applicable, downstream of the cooling and condensing unit, so that the CO₂ purification unit is used in the oxyfuel operation mode only. The rest of the preheater exhaust gas is recirculated to the clinker cooler, as mentioned above, and may also be used otherwise, such as for cooling the bypass gas.

In the oxyfuel operation mode, a partial flow of the preheater exhaust gas may also be used as a transport and purging gas, such for the pneumatic fuel injection into the kiln, as primary air for burners, and/or for purging of critical sealings like the kiln inlet/outlet seals, fan shafts, bag filter dust extraction equipment etc., in order to avoid false air ingress. False air would result in an undesired dilution of CO₂ rich gas with nitrogen.

In the air operation mode, air can be used as the transport and purging gas. Therefore, suitable switching means may be used for using either the preheater exhaust gas or air as transport and purging gas.

In this regard, a preferred embodiment of the invention provides that the preheater exhaust gas recirculation means comprises a diverter for diverting a partial flow of the preheater exhaust gas to the clinker furnace burner, wherein fourth switching means are provided for either using air, or the preheater exhaust gas that is diverted from the preheater exhaust gas recirculation means, as a transport gas for a fuel of the clinker furnace burner and/or as primary gas for the clinker furnace burner.

In the same way, preheater exhaust gas or air may also be directed to a burner of the pre-calciner. Accordingly, the preheater exhaust gas recirculation means preferably comprises a diverter for diverting a partial flow of the preheater exhaust gas to a burner of the pre-calciner, wherein fourth switching means are provided for either using air, or the preheater exhaust gas that is diverted from the preheater exhaust gas recirculation means, as a transport gas for a fuel of the burner and/or as primary gas for the burner.

According to a second aspect, the invention refers to method of operating a cement manufacturing plant, comprising the steps of:
grinding raw meal in the raw meal mill to obtain ground raw meal,
preheating the ground raw mill in the preheater string in counter current flow to hot exhaust gas coming from the clinker furnace,
optionally pre-calcining the preheated raw meal in the pre-calciner,
calcining the preheated and optionally pre-calcined raw meal in the clinker furnace in counter current flow to combustion gas of the clinker furnace burner to obtain cement clinker,
cooling the cement clinker in the clinker cooler,
optionally recirculating bypass gas, which is taken from between an exhaust gas end of the clinker furnace and the at least one preheater string, to the first section of the clinker cooler,
recirculating exhaust gas leaving the at least one preheater string into the first section of the clinker cooler,
switching between an air operation mode and an oxyfuel operation mode, comprising:
actuating first switching means for feeding either air or oxygen rich gas to a burning zone of the clinker furnace burner, preferably via the first section of the clinker cooler,
actuating second switching means for either recirculating preheater exhaust gas to the first section of the clinker cooler or releasing preheater exhaust gas through an exhaust stack.

Preferably, the bypass gas is cooled before being recirculated into the first section of the clinker cooler, wherein cooling preferably comprises mixing the bypass gas with a cooling gas in at least one mixing chamber.

Preferably, said switching between an air operation mode and an oxyfuel operation mode comprises actuating third switching means for either using a partial flow of the preheater exhaust gas as the cooling gas or using air as the cooling gas.

Preferably, said switching between an air operation mode and an oxyfuel operation mode comprises actuating fourth switching means for either using air or a partial flow of the preheater exhaust gas as a transport gas for a fuel of the clinker furnace burner and/or as a transport gas for a fuel of the burner of the pre-calciner.

Preferably, the preheater exhaust gas is subjected to a thermal oxidation at a temperature of 750-900°C in a thermal oxidizer for thermally decomposing volatile compounds in the preheater exhaust gas.

Preferably, the preheater exhaust gas is cooled in a first heat exchanger arranged upstream of the thermal oxidizer and subsequently cooled in a second heat exchanger arranged downstream of the thermal oxidizer, wherein heat transfer is effected from the preheater exhaust gas to a working fluid of a working fluid cycle comprising the first and second heat exchangers, the working fluid circulating such that working fluid coming from a heat-to-power unit is first directed through the second heat exchanger and subsequently directed through the first heat exchanger.

Preferably, the preheater exhaust gas in the oxyfuel operation mode is directed through a cooling and condensing unit to condense and separate water from the preheater exhaust gas.

Preferably, in the oxyfuel operation mode a partial flow of the preheater exhaust gas is directed to a CO₂ purification unit.

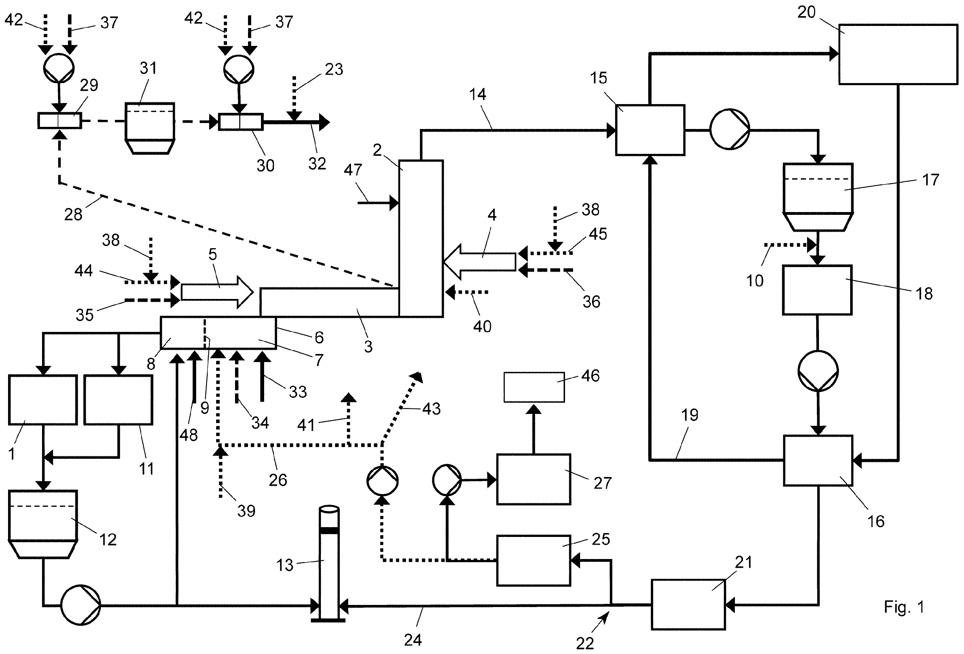

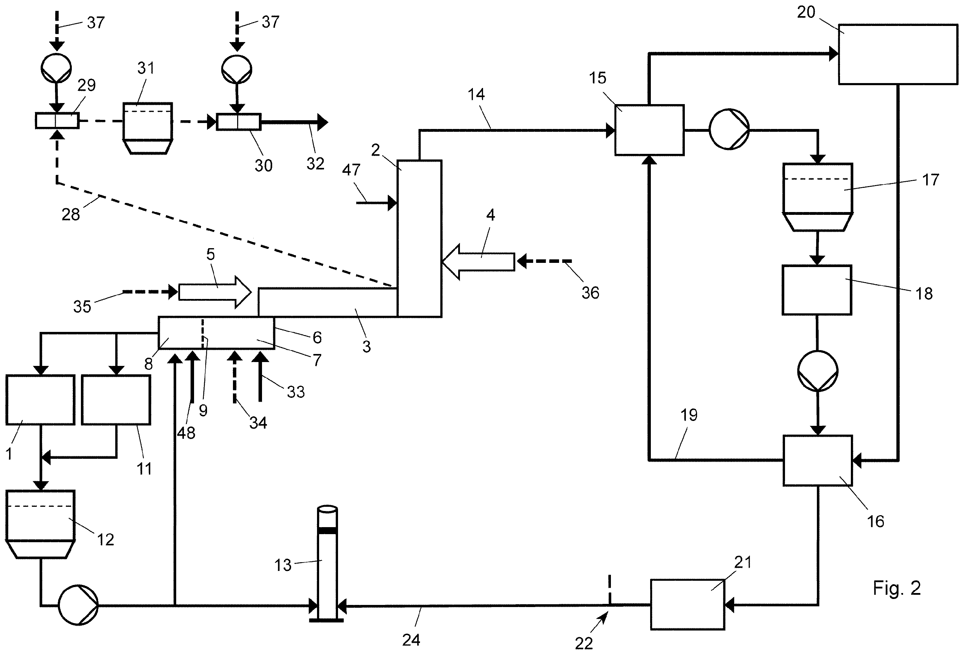

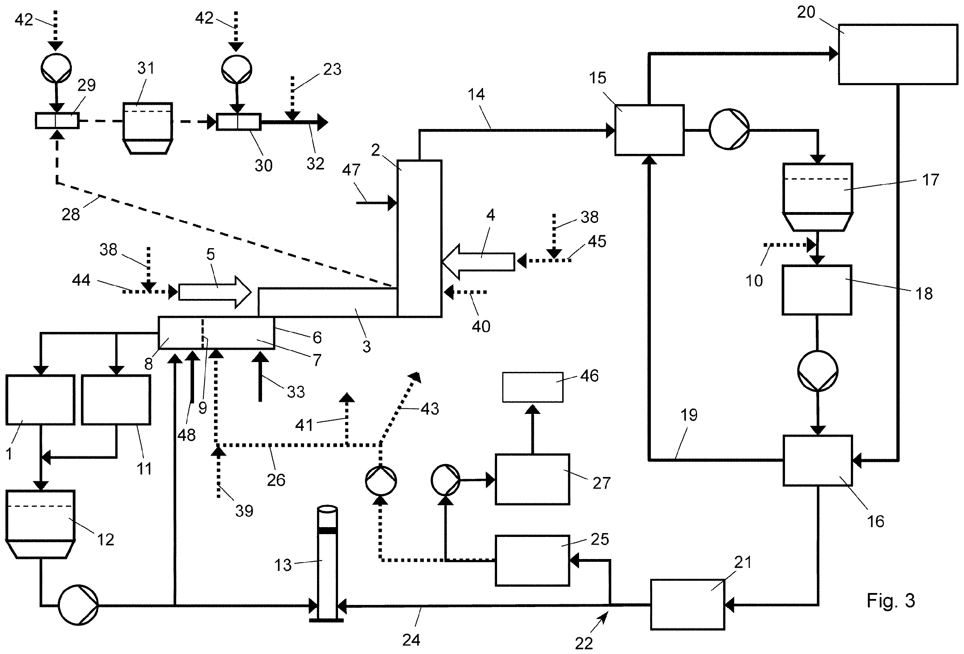

The invention will now be described in more detail with reference to the attached drawings. Therein, Fig. 1 shows a schematic illustration of a cement manufacturing plant according to the invention, Fig. 2 shows the cement manufacturing plant of Fig. 1 when operated in an air operation mode, and Fig. 3 shows the cement manufacturing plant of Fig. 1 when operated in an oxyfuel operation mode.

Fig. 1 shows a schematic illustration of a cement manufacturing plant according to the invention that can be selectively operated in an oxyfuel operation mode and in an air operation mode. The cement manufacturing plant comprises a raw meal mill 1 for grinding raw meal to obtain ground raw meal. The ground raw meal is introduced into the preheater string 2 that comprises a number of cyclone suspension-type preheaters for preheating the ground raw meal in counter current flow to hot exhaust gas coming from the clinker furnace 3, In the lower part of the preheater string 2, a pre-calciner is arranged for pre-calcining the preheated raw meal. As schematically indicated by arrow 4, a fuel is introduced into the pre-calciner for pre-calcining the preheated raw meal. The clinker furnace 3 is provided for calcining the preheated and pre-calcined raw meal in counter current flow to combustion gas of a clinker furnace burner to obtain cement clinker. The clinker furnace burner is arranged at the clinker discharge end of the clinker furnace 3 and the feeding of fuel to the clinker furnace burner is schematically indicated by arrow 5.

Further, a clinker cooler 6 is arranged for cooling the cement clinker coming from the clinker furnace 3. The clinker cooler 6 comprises a first section 7 that is adjacent the clinker discharge end of the clinker furnace 3 and a second section 8 that is remote from the clinker discharge end of the clinker furnace 3. A separation means for separating the first section 7 from the second section 8 is denoted by reference numeral 9. Cooler vent-air leaving the second section 8 of the clinker cooler 6 is directed to the raw meal mill 1 for drying the raw meal, after having been separated from dust particles in a cyclone separator. If the raw meal mill 1 is not in operation, the clinker cooler vent-air may bypass the raw meal mill 1 by being guided through an air-to-air heat exchanger 11, in order to cool the cooler vent-air for protecting the downstream bag filter 12 from high temperature. The cooler vent-air is recirculated into the second section 8 of the clinker cooler 6. A partial flow of the cooler vent-air may also be released into the environment through the exhaust stack 13. Further, an air introduction 48 is provided for adding fresh ambient air into the cooler vent-air circulation.

The preheater exhaust gas is leaving the preheater string 2 at 14 and is directed to a waste heat recovery system that comprises a first heat exchanger 15 and a second heat exchanger 16. The preheater exhaust gas flows through the first heat exchanger 15, is then cleaned from dust particles in the dust filter 17, is led through the regenerative thermal oxidizer 18 and finally flows through the second heat exchanger 16. Upstream of the regenerative thermal oxidizer 18, oxygen 10 may be injected into the preheater exhaust gas, if needed. The first heat exchanger 15 and the second heat exchanger 16 are integrated into a working fluid cycle 19 of a heat-to-power unit 20 and arranged to transfer heat from the preheater exhaust gas to a working fluid of the working fluid cycle 19. In the working fluid cycle 19 the first heat exchanger 15 is arranged downstream of the second heat exchanger 16. The preheater exhaust gas coming from the second heat exchanger 16 is subjected to further purification and cooling in the wet scrubber 21.

The purified preheater exhaust gas coming from the wet scrubber 21 can either be directed to an exhaust stack 13 or can be recirculated into the clinker furnace 3 via the clinker cooler 6. Before being recirculated, the preheater exhaust gas introduced into a cooling and condensing unit 25, in which the exhaust gas is further cooled and water is removed. The preheater exhaust gas coming from the cooling and condensing unit 25 is directed to the first section 7 of the clinker cooler 6 via the line 26. A partial flow of the gas may be branched off and led through the CO₂ purification unit 27.

Bypass gas is extracted from the inlet chamber of the clinker furnace 3 and via the line 28 and directed through a first mixing chamber 29 and a second mixing chamber 30, in which cooling gas is added to the bypass gas, in order to decrease the temperature of the bypass gas. Volatile components contained in the bypass gas are removed by means of a filter 31 and the purified bypass gas is recirculated into the clinker furnace 3 via the first section 7 of the clinker cooler 6. The recirculation is performed by a connection (not shown in Fig. 1) between the line 32 and the inlet 33 of the clinker cooler 6, whereby additional oxygen 23 may be introduced here, if needed.

The combustion gas resulting from the combustion in the clinker furnace 3 and the pre-calciner is subjected to a selective non-catalytic reduction (SNCR) of NO by injection of NH₃ at 47 at around 900°C. The reagent is typically injected at the exit of the pre-calciner and results in a reaction of NO with NH₃ to N₂ and eventually also CO₂.

The cement plant shown in Fig. 1 is configured for switching between an air operation mode and an oxyfuel operation mode. In the air operation mode, air is used as the combustion gas for burning fuel 5 in the clinker furnace 3 and for burning fuel 4 in the pre-calciner. Air is introduced into the first section 7 of the clinker cooler 6 at 34 and is led into the burning zone of the clinker furnace burner. Further, air 35 is used as a transport gas for conveying fuel 5 to the clinker furnace burner and air 36 is used as a transport gas for conveying fuel 4 to the burner of the pre-calciner. In the air operation mode, air is also used as cooling gas for cooling the bypass gas in the first mixing chamber 29 and in the second mixing chamber 30 and optionally further downstream in the bypass recirculation line 32, the respective air introduction being denoted by reference numeral 37. In the air operation mode, the preheater exhaust gas coming from the wet scrubber 21 is led to the exhaust stack 23 via line 24.

In the oxyfuel operation mode, an oxygen rich gas is used as the combustion gas instead of air. Therefore, instead of introducing air into the clinker cooler 6 at 34, oxygen coming from an air separation unit via line 39 is introduced into the clinker furnace 3 via the first section 7 of the clinker cooler 6 and oxygen is also introduced into the pre-calciner via line 40. In the oxyfuel operation mode, the preheater exhaust gas that is rich in CO₂, instead of being directed to the exhaust stack 23 via the line 24, is fed to the cooling and condensing unit 25, in order to increase the concentration of CO₂ in the exhaust gas. The preheater exhaust gas is recirculated into the clinker cooler via line 26. A partial flow of the preheater exhaust gas is diverted via line 41 and used as cooling gas in the first mixing chamber 29 and in the second mixing chamber 30 and optionally further downstream in the recirculation line 32, by being introduced at 42. Another partial flow of the preheater exhaust gas is branched off at 43 and used as transport gas 44 and 45 for conveying fuel 4 and 5 to the clinker furnace burner and the burner of the pre-calciner, respectively. Additional oxygen 38 may be introduce here, if needed. Further, a partial flow of the CO₂ rich preheater exhaust gas is branched off from the recirculation line and introduced in the CO₂ purification unit 27, where all undesired components (e.g. N₂, H₂O, CO, SO_{X}, NOx, HF, Ar) are removed, in order to achieve a CO₂ concentration of > 96.5% to > 99.5%. CO₂ is extracted from the CO₂ purification unit at 46, while the remaining components are released via the exhaust stack 23.

For switching between the air operation mode and the oxyfuel operation mode, the cement manufacturing plant comprises first switching means for connecting either air 34 or source of oxygen rich gas to the burning zone of the clinker furnace burner. Further, second switching means 22 are provided for either establishing or separating a connection of the preheater exhaust gas to the first section 7 of the clinker cooler 6. Third switching means are provided for either using air 37, or the preheater exhaust gas 42 that is diverted from the preheater exhaust gas recirculation at 41, as the cooling gas in the mixing chambers 29 and 30. Finally, fourth switching means are provided for either using air 35 and 36, or the preheater exhaust gas 44 and 45 that is diverted from the preheater exhaust gas recirculation at 43, as a transport gas for the fuel 4 and 5, respectively, of the clinker furnace burner and the burner of the pre-calciner.

For better illustration of the air operation mode, Fig. 2 shows only the parts of the cement manufacturing plant from Fig. 1 that are used in the air operation mode.

For better illustration of the oxyfuel operation mode, Fig. 3 shows only the parts of the cement manufacturing plant from Fig. 1 that are used in the oxyfuel operation mode.

## Claims

1. Cement manufacturing plant comprising
a raw meal mill for grinding raw meal to obtain ground raw meal,
at least one preheater string comprising cyclone suspension-type preheaters for preheating the ground raw meal in counter current flow to hot exhaust gas coming from a clinker furnace,
optionally a pre-calciner for pre-calcining the preheated raw meal,
a clinker furnace for calcining the preheated and optionally pre-calcined raw meal in counter current flow to combustion gas of a clinker furnace burner to obtain cement clinker,
a clinker cooler for cooling the cement clinker, the clinker cooler preferably being connected to the raw meal mill for feeding clinker cooler vent-air to the raw meal mill, wherein the clinker cooler comprises a first section and a second section, the first section being adjacent a clinker discharge end of the clinker furnace and the second section being remote from the clinker discharge end of the clinker furnace,
optionally cooler vent-air recirculation means for recirculating clinker cooler vent-air from the raw meal mill to the second section of the clinker cooler,
optionally bypass gas recirculation means for recirculating bypass gas, which is taken from between an exhaust gas end of the clinker furnace and the at least one preheater string, to the first section of the clinker cooler,
preheater exhaust gas recirculation means for recirculating exhaust gas leaving the at least one preheater string into the first section of the clinker cooler,
the cement plant being configured for switching between an air operation mode and an oxyfuel operation mode and comprising:
first switching means for connecting either a source of air or a source of oxygen rich gas to a burning zone of the clinker furnace burner, preferably via the first section of the clinker cooler,
second switching means for either establishing or separating a connection of the preheater exhaust gas recirculation means to the first section of the clinker cooler.

2. Cement manufacturing plant according to claim 1, wherein an air separation unit is used as the source of oxygen.

3. Cement manufacturing plant according to claim 1 or 2, wherein the bypass gas recirculation means comprises cooling means for cooling the bypass gas that is recirculated to the first section of the clinker cooler, wherein the cooling means preferably comprises at least one mixing chamber for mixing the bypass gas with a cooling gas.

4. Cement manufacturing plant according to claim 3, wherein the preheater exhaust gas recirculation means comprises a diverter for diverting a partial flow of the preheater exhaust gas to the mixing chamber, wherein third switching means are provided for either using air, or the preheater exhaust gas that is diverted from the preheater exhaust gas recirculation means, as the cooling gas.

5. Cement manufacturing plant according to any one of claims 1 to 4, wherein preheater exhaust gas recirculation means comprises a thermal oxidizer, preferably a regenerative thermal oxidizer, for thermally decomposing volatile compounds in the preheater exhaust gas.

6. Cement manufacturing plant according to claim 5, wherein the preheater exhaust gas recirculation means comprises a first and a second heat exchanger, the first heat exchanger being arranged upstream of the thermal oxidizer and second heat exchanger being arranged downstream of the thermal oxidizer, wherein the first and second heat exchangers are integrated into a working fluid cycle of a heat-to-power unit and arranged to transfer heat from the preheater exhaust gas to a working fluid of the working fluid cycle, wherein, in the working fluid cycle, the first heat exchanger is arranged downstream of the second heat exchanger.

7. Cement manufacturing plant according to any one of claims 1 to 6, wherein the preheater exhaust gas recirculation means comprises a cooling and condensing unit for cooling the preheater exhaust gas in the oxyfuel operation mode so as to condense and separate water from the preheater exhaust gas.

8. Cement manufacturing plant according to any one of claims 1 to 7, wherein the preheater exhaust gas recirculation means comprises a diverter for diverting a partial flow of the preheater exhaust gas to the clinker furnace burner, wherein fourth switching means are provided for either using air, or the preheater exhaust gas that is diverted from the preheater exhaust gas recirculation means, as a transport gas for a fuel of the clinker furnace burner.

9. Cement manufacturing plant according to any one of claims 1 to 8, wherein the preheater exhaust gas recirculation means comprises a diverter for diverting a partial flow of the preheater exhaust gas to a CO₂ purification unit.

10. A method of operating a cement manufacturing plant according to any one of claims 1 to 9, comprising the steps of:
grinding raw meal in the raw meal mill to obtain ground raw meal,
preheating the ground raw mill in the preheater string in counter current flow to hot exhaust gas coming from the clinker furnace,
optionally pre-calcining the preheated raw meal in the pre-calciner,
calcining the preheated and optionally pre-calcined raw meal in the clinker furnace in counter current flow to combustion gas of the clinker furnace burner to obtain cement clinker,
cooling the cement clinker in the clinker cooler,
optionally recirculating bypass gas, which is taken from between an exhaust gas end of the clinker furnace and the at least one preheater string, to the first section of the clinker cooler,
recirculating exhaust gas leaving the at least one preheater string into the first section of the clinker cooler,
switching between an air operation mode and an oxyfuel operation mode, comprising:
actuating first switching means for feeding either air or oxygen rich gas to a burning zone of the clinker furnace burner, preferably via the first section of the clinker cooler,
actuating second switching means for either recirculating preheater exhaust gas to the first section of the clinker cooler or releasing preheater exhaust gas through an exhaust stack.

11. Method according to claim 10, wherein the bypass gas is cooled before being recirculated into the first section of the clinker cooler, wherein cooling preferably comprises mixing the bypass gas with a cooling gas in at least one mixing chamber.

12. Method according to claim 11, wherein said switching between an air operation mode and an oxyfuel operation mode comprises actuating third switching means for either using a partial flow of the preheater exhaust gas as the cooling gas or using air as the cooling gas.

13. Method according to any one of claims 10 to 12, wherein said switching between an air operation mode and an oxyfuel operation mode comprises actuating fourth switching means for either using air or a partial flow of the preheater exhaust gas as a transport gas for a fuel of the clinker furnace burner and/or as a transport gas for a fuel of the burner of the pre-calciner.

14. Method according to any one of claims 10 to 13, wherein the preheater exhaust gas is subjected to a thermal oxidation at a temperature of 750-900°C in a thermal oxidizer for thermally decomposing volatile compounds in the preheater exhaust gas.

15. Method according to claim 14, wherein the preheater exhaust gas is cooled in a first heat exchanger arranged upstream of the thermal oxidizer and subsequently cooled in a second heat exchanger arranged downstream of the thermal oxidizer, wherein heat transfer is effected from the preheater exhaust gas to a working fluid of a working fluid cycle comprising the first and second heat exchangers, the working fluid circulating such that working fluid coming from a heat-to-power unit is first directed through the second heat exchanger and subsequently directed through the first heat exchanger.

16. Method according to any one of claims 10 to 15, wherein the preheater exhaust gas in the oxyfuel operation mode is directed through a cooling and condensing unit to condense and separate water from the preheater exhaust gas.

17. Method according to any one of claims 10 to 16, wherein in the oxyfuel operation mode a partial flow of the preheater exhaust gas is directed to a CO₂ purification unit.
